Europäisches Patentamt

(19) European Patent Office

Office européen des brevets

(11) Numéro de publication: **0 064 120**
**B1**

(12) **FASCICULE DE BREVET EUROPEEN**

(45) Date de publication du fascicule du brevet:
26.08.87

(21) Numéro de dépôt: **81430012.5**

(22) Date de dépôt: **30.04.81**

(51) Int. Cl.⁴: **H 04 J 3/16,** H 04 J 3/17

(54) **Procédé de détermination de la configuration des canaux actifs dans un système de communication multiplex et dispositif de mise en oeuvre dudit procédé.**

| | |
|---|---|
| (43) Date de publication de la demande: **10.11.82 Bulletin 82/45** | (73) Titulaire: **International Business Machines Corporation, Old Orchard Road, Armonk, N.Y. 10504 (US)** |
| | (84) Etats contractants désignés: **DE GB** |
| (45) Mention de la délivrance du brevet: **26.08.87 Bulletin 87/35** | (73) Titulaire: **Compagnie IBM FRANCE, 5 Place Vendôme, F-75000 Paris 1er (FR)** |
| | (84) Etats contractants désignés: **FR** |
| (84) Etats contractants désignés: **DE FR GB** | (72) Inventeur: **Cholat-Namy-Jean, 9 rue du Printemps, F-06160 Juan-Les-Pins (FR)** |
| (56) Documents cités: FR - A - 2 122 102 FR - A - 2 197 292 GB - A - 1 310 772 GB - A - 2 066 024 US - A - 3 652 997 US - A - 3 982 074 | (74) Mandataire: **Tubiana, Max, Compagnie IBM France Département de Propriété Industrielle, F-06610 La Gaude (FR)** |

ACTORUM AG

## Description

Domaine Technique

L'invention concerne les communications de type numérique et plus particulièrement les communications dans lesquelles les techniques de multiplexage sont utilisées pour concentrer plusieurs canaux numériques sur une voie de transmission unique.

Etat de la Technique

La construction de lignes, ou plus généralement de voies de communication, étant onéreuse, on a tout intérêt à exploiter lesdites lignes aux mieux de leurs possibilités. Pour ce faire, on a développé un certain nombre de techniques parmi lesquelles se trouvent les techniques dites de multiplexage grâce auxquelles on concentre à l'émission les données provenant de plusieurs canaux, sur une voie unique ou support commun de débit. L'information véhiculée par ledit support commun, doit être traitée à la réception, plus précisément être démultiplexée pour permettre d'orienter les informations reçues, vers leurs destinataires. Ces destinataires sont respectivement rattachés à des canaux séparés lorsque le système de communication est du type dit point à point. Plusieurs destinataires peuvent être rattachés à un même canal lorsque le système de communication est du type multipoints. Il existe même des systèmes hybrides dans lesquels plusieurs canaux sont prévus à la sortie du démultiplexeur; canaux dont certains sont rattachés à plusieurs destinataires selon les techniques multipoints tandis que les autres sont respectivement rattachés à un seul destinataire. Mais dans tous les cas, il faut en règle générale que la configuration de l'ensemble du réseau de communication soit parfaitement définie et connue à la fois du multiplexeur et du démultiplexeur pour que les informations puissent être correctement orientées vers leurs destinataires effectifs après avoir été véhiculées sur ledit support commun. En outre pour que l'exploitation dudit support commun puisse se faire au mieux des intérêts de l'utilisateur, il faut que la configuration des canaux actifs puisse être modifiée selon les besoins. C'est ainsi que bien que l'on ait intérêt à concentrer le plus possible de communications, donc de canaux, sur ledit support commun, les conditions instantanées de transmission peuvent nécessiter une réduction du nombre des canaux mis en activité simultanément. En d'autres termes, les conditions, atmosphériques notamment, peuvent perturber les transmissions au point que l'on ne puisse faire passer sur ledit support commun que les communications provenant d'un nombre de canaux inférieur au nombre total de canaux rattachés au système. Par conséquent, certains canaux préalablement rattachés au support commun doivent être momentanément désaffectés. On comprend aisément que si à l'émission (côté multiplexage) certains canaux sont désaffectés, il faut naturellement qu'à l'autre bout du support commun le démultiplexeur en soit averti pour que les données reçues soient bien orientées vers leurs destinataires respectifs, ou en d'autres termes pour que la configuration des canaux côté Réception soit adaptée à celle des canaux côté Emission.

En règle générale, un même canal sert à la fois à l'émission et à la réception. Par conséquent, l'utilisateur, ou terminal qui y est rattaché, effectue aussi bien des fonctions émission que réception. Donc en principe l'ordre de modification de la configuration des canaux actifs devrait pouvoir provenir de l'une ou l'autre des extrémités de la voie unique ou support commun de communication. En pratique, cependant la station se trouvant à l'une des extrémités du support commun de débit se voit assigner un rôle de maître tandis que la station à l'autre extrémité se voit assigner un rôle d'esclave. La décision de changer la configuration des canaux actifs, ainsi que le choix de la meilleure configuration à un instant donné, se feront du côté maître, et le côté esclave devra s'y conformer en modifiant de manière correspondante la configuration des canaux actifs qui lui sont rattachés. Il en résulte naturellement que les dispositifs côté esclave doivent être mis au courant des décisions du maître quant à la configuration des canaux actifs, et prendre les mesures nécessaires à la mise en œuvre de ces décisions, d'où apparaît la nécessité d'une interruption momentanée du trafic utile, interruption qui doit être réduite au strict minimum.

Plusieurs solutions ont déjà été proposées pour résoudre au mieux les problèmes de communication à l'esclave des décisions de modification de configuration de canaux multiplex prises par le maître et d'exploitation de ces décisions. La solution la plus simple à mettre en œuvre consiste à placer un opérateur à chacune des extrémités de la voie unique de communication, et à fournir à chaque opérateur un moyen de communication avec l'autre opérateur. L'opérateur côté esclave modifiera la configuration des canaux qu'il gère, conformément aux instructions que lui communiquera l'opérateur placé côté maître. Bien que facile à mettre en œuvre, cette solution n'est pas la moins onéreuse pour l'exploitant.

Une autre solution proposée consiste à prévoir, dans ladite voie unique et en dehors de la zone de fréquences qui y est normalement utilisée pour la transmission des données provenant des canaux mentionnés plus haut, une zone ou voie dite latérale qui sera réservée uniquement à la communication par le maître à l'esclave d'un signal spécial transmis à vitesse relativement basse et indiquant la décision de changer la configuration des canaux actifs. L'esclave modifiera la configuration de ses canaux pour adapter celle-ci, par approximations successives, à la configuration des canaux du maître. Cette méthode d'adaptation de canaux est relativement lente. En outre, elle présente des risques de perturbation du système de transmission par interférence de ladite voie latérale sur la voie où sont transmises des données.

Enfin, un dispositif décrit dans le brevet FR-A-2 122 102 propose un procédé permettant de communiquer à la station esclave la configuration des canaux choisis par la station maîtresse pour être rendus actifs, par formation au niveau de l'émetteur d'un message dit d'attribution (de canaux) qui est transmis, précédé d'une séquence de synchronisation, vers la station esclave. Le message d'attribution est utilisé dans le récepteur de la station esclave pour mettre à l'état actif les canaux choisis. Ce dispositif met en jeu des moyens additionnels relativement complexes, aussi bien pour la construction du message d'attribution proprement dit, que pour son exploitation côté réception. Tel n'est pas le cas du procédé de l'invention dont la réalisation nécessitera, comme on le verra plus loin, un nombre limité de moyens peu onéreux et simples dont le fonctionnement est judicieusement combiné à celui des moyens préexistants dans le système de communication multiplex considéré.

La présente invention a pour objet un procédé permettant, dans un système de transmission de données dans lequel plusieurs canaux sont concentrés sur une voie unique de transmission de données par une opération de multiplexage au niveau d'une station maîtresse puis où les données sont démultiplexées à l'autre extrémité de ladite voie unique par une station dite esclave qui oriente les données vers leurs destinataires, de communiquer l'information relative à la configuration des canaux choisie par la station maîtresse, ledit procédé étant caractérisé par transmission par multiplexage d'un caractère prédéterminé sur chacun des canaux choisi pour être actifs, ladite configuration de canaux au niveau de la station esclave se faisant alors à partir des bits reçus.

La présente invention a encore pour objet la transmission à la station esclave de l'information de configuration des canaux à la vitesse à laquelle sont transmises les données durant les périodes de transmission des données sur ladite voie unique de transmission.

D'autres objets, caractéristiques et avantages de la présente invention ressortiront mieux de l'exposé qui suit, fait en référence aux dessins annexés à ce texte qui représentent un mode préféré de réalisation de celle-ci.

Brève Description des Figures
Figure 1:
Configuration générale d'un système de communication destiné à mettre en œuvre l'invention.
Figures 2A et 2B:
Détail des circuits de mise en œuvre de l'invention, côté émission.
Figure 3:
Circuits de mise en œuvre de l'invention côté réception.

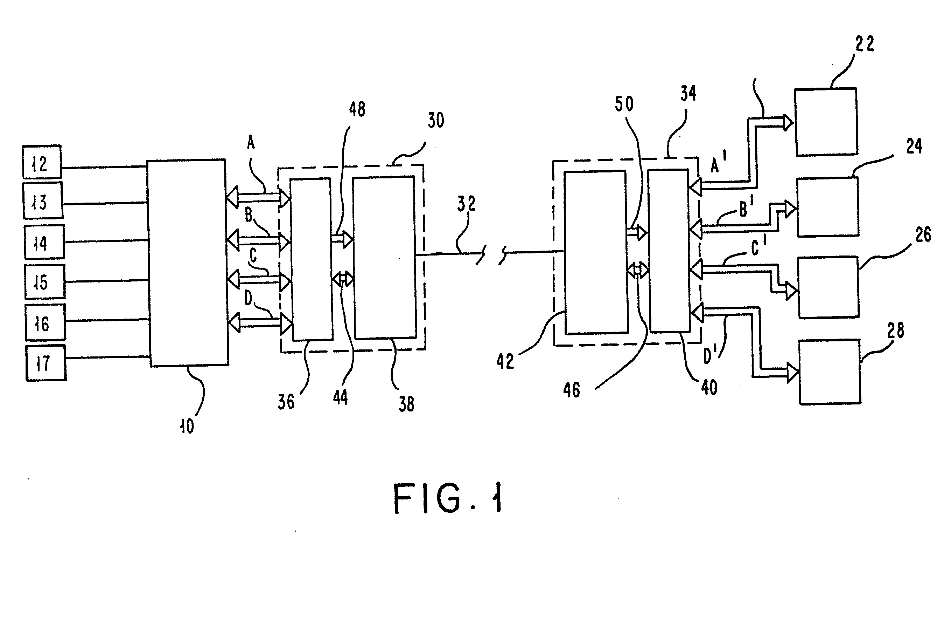

Description Détaillée de l'Invention
La figure 1 montre la configuration générale d'un système de communications en multiplex. Un système central 10 auquel sont rattachés des équipements terminaux de traitement de données (DTE) 12, 13, 14, 15, 16, 17, etc., est chargé de gérer les communications avec un ensemble de terminaux de traitement de données 22, 24, 26 et 28. Le système central 10 qui peut être par exemple un contrôleur de communications IBM 3705 et que l'on considérera ici comme étant lui-même assimilable à un DTE, est relié à un modem multi-canaux 30, au travers de canaux A, B, C et D. Les liaisons sur lesdits canaux A, B, C et D, entre système central 10 et modem multi-canaux 30, se font selon les normes V24 (dites jonctions de type V24) définies par le Comité Consultatif International pour le Télégraphe et le Téléphone (CCITT). Le modem multi-canaux 30 est relié par une voie de communication unique (ou support commun de débit) 32, à un autre modem multi-canaux 34 du même type que 30. Le modem multi-canaux 34 est relié aux terminaux de traitement de données 22, 24, 26 et 28 par des canaux A', B', C' et D' semblables aux canaux A, B, C et D. Les jonctions entre modem 34 et terminaux 22 à 28 sont donc aussi du type V24 du CCITT. Chacun des modem multi-canaux 30 et 34 comporte essentiellement deux parties. L'une, désignée par 36 ou 40, selon l'extrémité de la voie de communication 32 considérée, est constituée par un dispositif de multiplexage (ou carte multiplex). L'autre désignée par 38 ou 42 est constituée par un modem proprement dit. Les modems multi-canaux 30 et 34 peuvent être constitués par exemple, par des modems IBM 3865 modifiés de façon à incorporer l'invention telle qu'elle sera décrite plus loin de manière détaillée. Chacun des dispositifs de multiplexage 36 ou 40, est relié au modem proprement dit qui lui correspond, c'est-à-dire qui appartient au même modem multi-canaux que lui, par une jonction de type V24, désignée par 44 ou 46 et par un bus 48 ou 50.

En fonctionnement, les données transitant sur les canaux A, B, C et D sont concentrées sur la voie unique 32 et orientées ensuite vers leurs destinataires reliés respectivement aux canaux A', B', C' et D'. La gestion des canaux A à D est effectuée par le système central 10 ayant en l'occurrence un rôle de maître. On dira, sur le plan plus général que la station (10, 30), située à gauche du support commun de débit 32 sur la figure 1, est une station maîtresse. En contrepartie, la station 34, placée à l'autre extrémité du support commun de débit 32 peut-être qualifiée d'esclave. De manière plus précise, en mode de fonctionnement dit de données et selon une procédure connue, la station maîtresse organise la transmission simultanée des données de ses canaux vers les destinataires rattachés respectivement aux canaux côté station esclave. La station esclave gère les communications dans l'autre sens, c'est-à-dire de A', B', C' et D' vers A, B, C et D. Si par exemple les canaux A à D ont chacun un débit binaire de 2400 bits par seconde (bps), ces bits seront multiplexés en un train unique de bits ayant un débit binaire de 9600 bps par le dispositif de multiplexage 36, et la transmission de ce train de bits sur la voie de transmission 32 sera organisée par la partie modem 38. A l'autre bout de la voie de transmission 32, le train de bits sera reçu par la partie modem 42 et démultiplexé par le dispositif 40 pour que les bits puissent être orientés vers les destinataires reliés aux canaux A' à D'. Plus précisément les données du canal A seront orientées vers le canal A' et de là vers le DTE 22, celles du canal B vers le canal B', et ainsi de suite. La configuration de multiplexage, c'est-à-dire les canaux actifs à un moment donné, et leurs débits, peuvent varier comme par exemple indiqué dans l'Avis V29 du CCITT.

Le tableau I ci-dessous, montre comment le train de bits est multiplexé en fonction des canaux actifs et des vitesses de transmission choisies. On notera que le train de bits obtenu par multiplexage est formé d'une succession de groupes de quatre bits (ou quadbit) Q1 à Q4. Chaque quadbit est fabriqué selon le tableau I par la carte multiplex 36 avant d'être transmis au modem 38 et de là à la station esclave par l'intermédiaire de la voie de transmission 32.

Tableau I

| Débit Global (bps) | Canal Actif | Débit du Canal Actif (bps) | Affectation | | | |
|---|---|---|---|---|---|---|
| | | | Q1 | Q2 | Q3 | Q4 |
| 9600 | A | 9600 | X | X | X | X |
| | A | 4800 | X | | X | |
| | B | 4800 | | X | | X |
| | A | 4800 | X | | X | |
| | B | 2400 | | X | | |
| | C | 2400 | | | | X |
| | A | 2400 | X | | | |
| | B | 2400 | | X | | |
| | C | 2400 | | | X | |
| | D | 2400 | | | | X |
| 4800 | A | 4800 | | | X | X |
| | A | 2400 | | | X | |
| | B | 2400 | | | | X |

Chacune des jonctions obéissant à l'avis V24 du CCITT comprend un certain nombre de lignes dont les fonctions sont résumées ci-dessous.

DSRS (Sélection du Débit Binaire)
    (1) Vers le modem:
        Cette ligne est utilisée par le DTE pour sélectionner le débit binaire du modem (9600 bps ou 4800 bps, selon que le niveau binaire de tension sur DSRS est haut ou bas).
    (2) En provenant du modem et vers le DTE:
        Cette ligne est utilisée pour définir le débit binaire auquel le DTE doit travailler.

TD (Emission de Données):
    Les données issues du DTE et à transmettre sont transférées au modem par cette ligne.

TT (Horloge Emission – DTE):
    Les signaux d'horloge d'émission fournis par le DTE sont transférés au modem par cette ligne.

RTS (Demande pour Emettre):
    Cette ligne est utilisée par le DTE pour mettre le modem en état d'émettre.

TTM (Horloge Emission – modem):
    Les signaux d'horloge d'émission fournis par le modem sont transférés au DTE par cette ligne.

RFS (Prêt à Emettre):
    Cette ligne est utilisée par le modem pour indiquer au DTE qu'il est prêt à émettre.

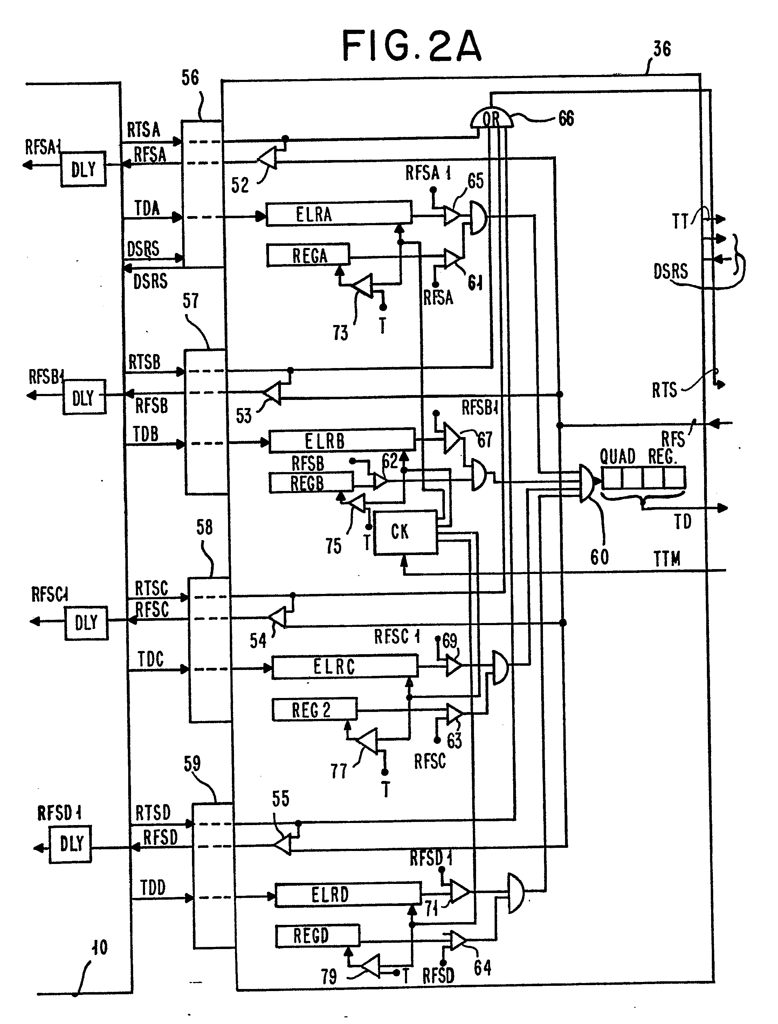

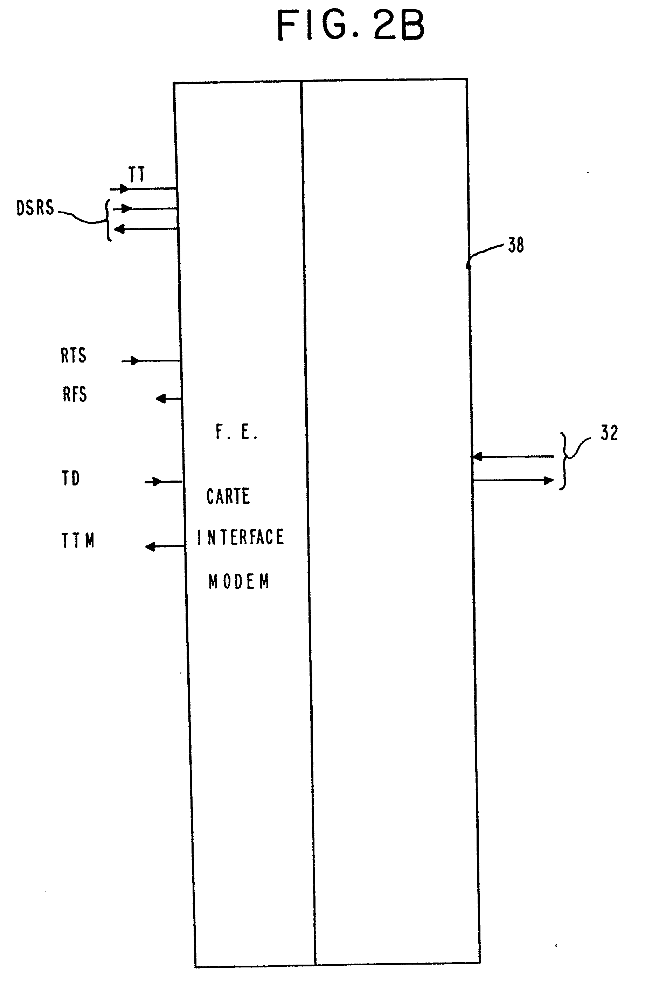

La figure 2 montre les éléments rajoutés au modem multi-canaux 30 et qui, en combinaison avec les circuits de multiplexage déjà existants, permettent de mettre en œuvre l'invention.

Pour distinguer les lignes de jonction type V24 définies plus haut, en fonction du canal auquel elles appartiennent, on a rajouté les suffixes A, B, C ou D. Par exemple, la ligne RFS associée au canal A est désignée par RFSA, etc. En outre, on a désigné par 56, 57, 58 et 59 les interfaces de type CCITT (V24) entre système central 10 et carte multiplex 36.

Conformément à la procédure CCITT, la ligne RTS du canal désirant transmettre doit être portée de zéro volt à un niveau prédéterminé de tension positive (niveau haut). Plus précisément, le système central 10 définit, en fonction de la vitesse de transmission (9600 bps ou 4800 bps) et de la configuration de canaux actifs choisie par lui, quelles sont, parmi les lignes RTSA, RTSB, RTSC et RTSD celles dont la tension doit passer au niveau haut. L'indication de ce passage au niveau haut est communiquée au modem 38 à travers un circuit OU logique 66 et la ligne RTS qui en sort. Dès qu'il est prêt à transmettre, le modem 38 porte la tension de la ligne RFS au niveau haut. Mais grâce à l'utilisation de portes logiques 52, 53, 54 et 55, seuls les canaux actifs vont voir le niveau de leurs lignes RFS s'élever et ce, après un délai dont on verra l'utilité ultérieurement. La carte multiplex 36 comporte un registre REGA, REGB, REGC ou REGD par canal. Ces registres dits de configuration emmagasinent des caractères hexadécimaux 7E (soit 01111110). Ce caractère 7E a en effet été choisi ici pour être le caractère prédéterminé servant à l'opération de configuration des canaux actifs objet de l'invention.

Les contenus des registres de configuration des canaux choisis pour devenir actifs (RFS = 1) sont utilisés pour construire une séquence dite représentative de configuration de canaux actifs, séquence formée de quadbits construits dans un registre désigné par QUAD REG qui est ici le registre de construction de quadbits de multiplexage normalement utilisé en mode de transmission de données. Pour cela, les sorties de REGA, REGB, REGC et REGD sont connectées au QUAD REG à travers un circuit OU 60 et des portes 61 à 64 dont l'ouverture est commandée par RFSA, RFSB, RFSC et RFSD, respectivement. Le rythme auquel les registres de configuration sont déchargés dans le QUAD REG dépend de la vitesse de transmission choisie (9600 ou 4800 bps).

Cette vitesse, choisie par le système central 10 est communiquée au modem 38 par une ligne désignée ici par TT. En retour, le modem renvoie un signal TTM commandant le fonctionnement d'une horloge CK de la carte de multiplexage 36. L'horloge CK à son tour, commande le rythme auquel les registres de configuration sont déchargés dans QUAD REG. Les signaux de l'horloge CK transmis aux registres de configuration passent par des portes 73, 75, 77 et 79 dont l'ouverture est commandée par un signal logique T. Ce signal logique est défini par l'horloge CK à partir de la montée du signal RFS de manière à permettre l'envoi du caractère 7E avec la vitesse la plus lente que l'on puisse utiliser sur un canal (ici 1 bit par baud (2400 bits par seconde)); ce signal T est donc dans l'exemple maintenu durant une période dite de configuration de canaux équivalente à 8 bauds. On a représenté sur le tableau II, les quadbits de détermination de configuration. Les caractères «7E» emmagasinés dans les registres de configuration REGA, REGB, REGC et REGD sont multiplexés vers le registre QUAD REG à raison d'un caractère 7E pour le canal le plus lent, soit celui à 2400 bps.

Lorsque la vitesse sur le support commun passe à 4800 bits par seconde (voir partie du bas du Tableau II); c'est un dibit qui est formé une fois par baud dans le registre QUAD REG (dont on n'utilise plus que deux positions de bits consécutives) et les deux cas possibles de transmission sont:

(5) canal A   2400 bits
    canal B   2400 bits
(6) canal A   4800 bits

Les lignes QUAD REG (5) et QUAD REG (6) du tableau II correspondent à ce cas.

Tableau II

| Q1 | Q2 | Q3 | Q4 | Q5 | Q6 | Q7 | Q8 | |
|---|---|---|---|---|---|---|---|---|
| | | | | | | | | V = 9600 |
| 0  1 | 1  1 | 1  1 | 1  0 | 0  1 | 1  1 | 1  1 | 1  0 | A 4800 |
|  0 |  1 |  1 |  1 |  1 |  1 |  1 |  0 | B 2400 |
| 0 | 1 | 1 | 1 | 1 | 1 | 1 | 0 | C 2400 |
| 0 0 0 1 | 1 1 1 1 | 1 1 1 1 | 1 1 1 0 | 1 0 1 1 | 1 1 1 1 | 1 1 1 1 | 0 1 0 0 | QUAD REG (1) |
| 0 1 1 1 | 1 1 1 0 | 0 1 1 1 | 1 1 1 0 | 0 1 1 1 | 1 1 1 0 | 0 1 1 1 | 1 1 1 0 | A 9600 |
| 0 1 1 1 | 1 1 1 0 | 0 1 1 1 | 1 1 1 0 | 0 1 1 1 | 1 1 1 0 | 0 1 1 1 | 1 1 1 0 | QUAD REG (2) |
| 0  1 | 1  1 | 1  1 | 1  0 | 0  1 | 1  1 | 1  1 | 1  0 | A 4800 |
| 0  1 | 1  1 | 1  1 | 1  0 | 0  1 | 1  1 | 1  1 | 1  0 | B 4800 |
| 0 0 1 1 | 1 1 1 1 | 1 1 1 1 | 1 1 0 0 | 0 0 1 1 | 1 1 1 1 | 1 1 1 1 | 1 1 0 0 | QUAD REG (3) |
|  0 |  1 |  1 |  1 |  1 |  1 |  1 |  0 | A 2400 |
|  0 |  1 |  1 |  1 |  1 |  1 |  1 |  0 | B 2400 |
| 0 | 1 | 1 | 1 | 1 | 1 | 1 | 0 | C 2400 |
| 0 | 1 | 1 | 1 | 1 | 1 | 1 | 0 | D 2400 |
| 0 0 0 0 | 1 1 1 1 | 1 1 1 1 | 1 1 1 1 | 1 1 1 1 | 1 1 1 1 | 1 1 1 1 | 0 0 0 0 | QUAD REG (4) |
| | | | | | | | | V = 4800 |
| | | | | 0  1 | 1  1 | 1  1 | 1  0 | A 2400 |
| | | | | 0  1 | 1  1 | 1  1 | 1  0 | B 2400 |
| | | | | 0 0 1 1 | 1 1 1 1 | 1 1 1 1 | 1 1 0 0 | QUAD REG (5) |
| | | | | 0 1 1 1 | 1 1 1 0 | 0 1 1 1 | 1 1 1 0 | A 4800 |
| | | | | 0 1 1 1 | 1 1 1 0 | 0 1 1 1 | 1 1 1 0 | QUAD REG (6) |

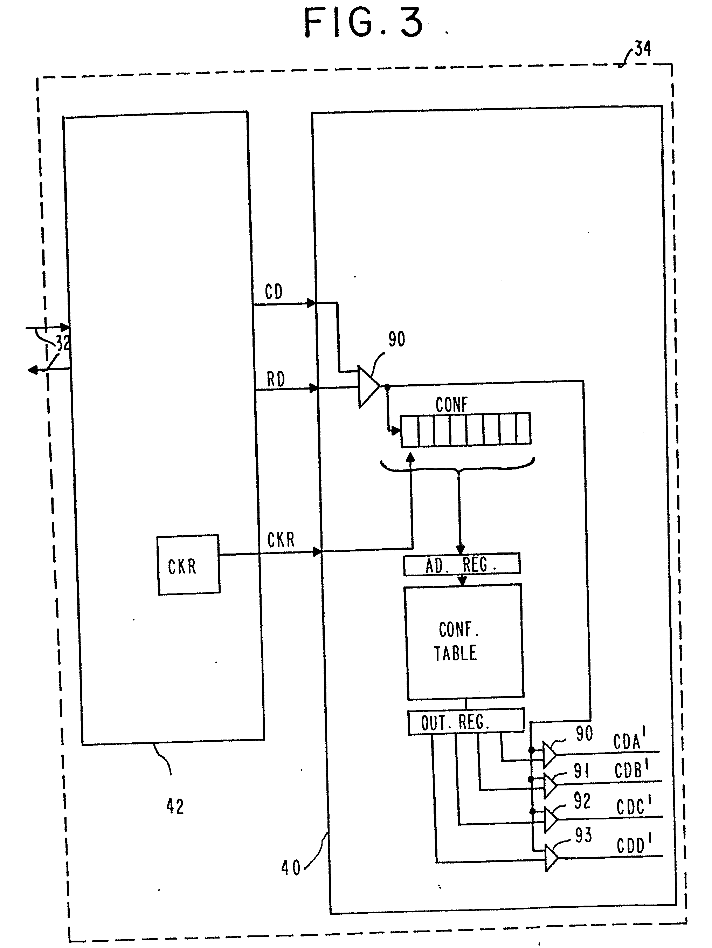

Les lignes du tableau II désignées par QUAD REG représentent des séquences de configuration de huit quadbits chacun. Par exemple, lorsque la station maîtresse 10 choisit la configuration canal A à 4800 bps et canaux B et C à 2400 bps, la séquence de configuration correspondante est celle désignée par QUAD REG (1). La transmission sur la voie 32 démarre de manière conventionnelle. On rappellera seulement que la porteuse étant transmise en permanence, le récepteur du modem 42 de la station esclave 34 aura auparavant effectué toutes les opérations conventionnelles de réglage basées sur la détection de la porteuse. Une séquence de synchronisation destinée à mettre la station esclave en état de réception de données est ensuite transmise par la station maîtresse, laquelle séquence définit la vitesse de transmission choisie et permet le réglage de l'horloge CKR du récepteur de la station esclave (voir figure 3). A la fin de la séquence de synchronisation, la tension de la ligne CD est portée de zéro volt à son niveau haut. Cette tension sert à ouvrir une porte logique 90, laquelle permet l'introduction des quadbits de détermination de configuration dans un registre CONF. Ce registre peut contenir deux quadbits consécutifs. Dès que le registre CONF est plein, il est déchargé dans un registre d'adresse AD REG qui sert à adresser une table désignée par CONF TABLE et dont le contenu est représenté sur le tableau III.

Le contenu du registre d'adresse AD REG est complété par un bit (égal à zéro ou à un selon que la vitesse de transmission choisie est 9600 ou 4800 bps) et le tout sert à adresser CONF TABLE. Cette table fournit en sortie l'information de configuration. Une vérification de cette opération peut être

Tableau III

| 9600 bps Adresse | Sortie |
|---|---|
| 1 1 1 1 0 1 0 0 | A 4800; B 2400; C 2400 |
| 0 1 1 1 1 1 1 0 | A 9600 |
| 1 1 1 1 1 1 0 0 | A 4800; B 4800 |
| 1 1 1 1 0 0 0 0 | A 2400; B 2400; C 2400; D 2400; |
| 4800 bps | |
| 1 1 1 1 1 1 0 0 | A 2400; B 2400 |
| 0 1 1 1 1 1 1 0 | A 4800 |

effectuée par l'utilisation des deux derniers quadbits pour adresser une autre section de CONF TABLE, laquelle contient la table IV.

Tableau IV

| 9600 bps Adresse | Sortie |
|---|---|
| 0 0 0 1 1 1 1 1 | A 4800; B 2400; C 2400 |
| 0 1 1 1 1 1 1 0 | A 9600 |
| 0 0 1 1 1 1 1 1 | A 4800; B 4800 |
| 0 0 0 0 1 1 1 1 | A 2400; B 2400, C 2400; D 2400 |
| 4800 bps | |
| 0 0 1 1 1 1 1 1 | A 2400; B 2400 |
| 0 1 1 1 1 1 1 0 | A 4800 |

L'utilisation d'un bit d'adresse supplémentaire suffit à déterminer si l'on adresse la section de CONF TABLE contenant le tableau III ou celle contenant le tableau IV.

Ainsi, une ou deux lectures de tables permettent de déterminer au niveau de la station esclave, la configuration de canaux choisie par la station maîtresse. Une fois cette opération terminée, un ensemble de portes 91 à 94 permet de porter au niveau haut les lignes CD des canaux A', B', C' et/ou D' choisis pour être actifs et la réception des données proprement dite peut démarrer. Ces données ont en effet été envoyées par la station maîtresse sur la voie 32, à la suite de la séquence des huit quadbits de détermination de configuration. Pour ce faire, après un délai schématisé par DLY, les lignes RFS des canaux sélectionnés à l'émission pour être actifs sont portées au niveau haut (RFSA1, RFSB1, RFSC1 et/ou RFSD1 au niveau haut), ce qui ouvre les portes 65, 67, 69 et/ou 71 placées en sortie des registres de données ELRA, ELRB, ELRC et/ou ELRD. Il faut naturellement que les portes 61, 62, 63 et 64 placées à la sortie des registres REGA, REGB, REGC et REGD soient fermées avant que ne démarre l'envoi de données. La transmission de données s'effectuera de manière classique en utilisant les registres de données ELRA, ELRB, ELRC et/ou ELRD. Ce qui précède explique le rôle du délai (schématisé par DLY) entre l'apparition des niveaux hauts en RFSA, RFSB, RFSC et RFSD et la montée des niveaux RFSA1, RFSB1, RFSC1 et RFSD1 correspondants.

Bien que l'on ait décrit dans ce qui précède et représenté un mode préféré de l'invention, il est évident que l'homme de l'Art peut y apporter de nombreuses modifications sans pour autant sortir du cadre de l'invention.

Notamment, le procédé de configuration décrit peut être simplifié lorsque les DTE choisis pour être actifs doivent normalement envoyer, conformément à la procédure SDLC, des caractères 7E avant de procéder à la transmission de données proprement dites. Dans de cas, l'invention peut être appliquée à moindres frais, et l'on pourra supprimer les registres REGA, REGB, REGC et REGD et leurs circuits annexes. De même, l'homme de l'Art peut choisir d'utiliser un caractère prédéterminé, autre que le caractère 7E.

**Revendications**

1. Procédé d'obtention et d'utilisation d'une information dite de configuration de canaux permettant, dans un système de transmission de données dans lequel les données de plusieurs canaux sont concentrées sur un support commun de débit par une opération de multiplexage réalisée au niveau d'une station maîtresse en fonction de ladite configuration de canaux puis où les données sont démultiplexées à l'autre extrémité dudit support commun par une station dite esclave qui oriente les données vers leurs destinataires respectivement désignés en fonction de ladite configuration de canaux, de communiquer et exploiter à la station esclave ladite information, ledit procédé comportant les opérations suivantes:

construction au niveau de la station maîtresse d'une séquence dite représentative de configuration de canaux actifs;

transmission par la station maîtresse et sur ledit support commun de ladite séquence représentative de configuration précédée d'une séquence dite de synchronisation;

réception par ladite station esclave desdites séquences de synchronisation et de configuration;

utilisation de la séquence de synchronisation pour mettre la station esclave en état de réception de données;

utilisation de ladite séquence de configuration pour en déduire l'indication de configuration des canaux choisis pour être actifs; et,

mise à l'état actif, côté esclave, des canaux choisis;

ledit procédé étant caractérisé en ce que ladite séquence représentative de configuration de canaux actifs est obtenue par transmission d'un caractère prédéterminé à partir de chacun des canaux choisis pour être actifs, ladite transmission étant effectuée en mode de transmission de données, et en ce que à la station esclave, les informations fournies par la séquence de synchronisation sont utilisées conjointement à celles de la séquence représentative de configuration pour en déduire la configuration des canaux de la station esclave à activer.

2. Procédé de configuration de canaux selon la revendication 1, caractérisé en ce que ledit caractère prédéterminé est le caractère 7E hexadécimal.

3. Procédé selon l'une des revendications 1 ou 2 caractérisé en ce que ladite séquence de configuration a une longueur prédéterminée conçue de manière telle qu'elle puisse contenir un caractère prédéterminé complet multiplexé à partir du canal le plus lent.

4. Procédé selon l'une des revendications 1 à 3 caractérisé en ce que la construction de ladite séquence de configuration soit effectuée par la transmission dudit caractère prédéterminé directement à partir des canaux choisis pour être rendus actifs.

5. Procédé selon l'une des revendications 1 à 4 caractérisé en ce que ladite table est directement adressée par une portion prédéterminée de ladite séquence de configuration.

6. Dispositif de formation et d'utilisation d'une séquence représentative de la configuration de canaux (A, B, C et/ou D) permettant, dans un système de transmission de données dans lequel les données de plusieurs canaux sont concentrées sur un support commun de débit (32) par une opération de multiplexage au niveau d'une station maîtresse (30) en fonction de ladite configuration de canaux et où les données sont démultiplexées à l'autre extrémité du support commun de débit par une station dite esclave (34) chargée d'orienter les données vers leurs destinataires (22, 24, 26 et/ou 28) respectivement désignés en fonction de ladite configuration de canaux, de communiquer à la station esclave la configuration des canaux choisis par la station maîtresse pour être rendus actifs, ledit dispositif étant caractérisé en ce qu'il comprend:

1) côté station maîtresse:
   des moyens (REGA, REGB, REGC, REGD) d'emmagasinage d'un caractère prédéterminé pour chacun des canaux rattachés à ladite station maîtresse;
   des moyens de transmission (38) par multiplexage en mode dit de transmission de données, des caractères prédéterminés des canaux choisis pour être actifs;

2) côté station esclave:
   des moyens de réception (34, 42) des caractères multiplexés, reliés audit support commun de débit, et incluant:
   des moyens de stockage (CONF) des caractères reçus; et
   une table de configuration (CONF TABLE) qui adressée par le contenu desdits moyens de stockage fournit directement l'information représentative de configuration des canaux actifs; et
   des moyens contrôlés par ladite information de configuration des canaux actifs pour mettre en activité les canaux à rendre actifs.

7. Dispositif selon la revendication 6 caractérisé en ce que ledit multiplexage de caractères prédéterminés est contrôlé par un système central (10).

8. Dispositif selon la revendication 6 caractérisé en ce que lesdits caractères sont des caractères 7E hexadécimal directement fournis par des terminaux de traitement de données (12 à 17) choisis pour être respectivement rattachés à un canal actif.

9. Dispositif selon la revendication 6 caractérisé en ce que lesdits moyens de transmission comportent un registre (QUAD REG) destiné à emmagasiner des groupes de bits (quadbits) construits par multiplexage des données de registres (REGA, REGB, REGC et/ou REGD) appartenant auxdits moyens d'emmagasinage associés aux canaux actifs.

**Claims**

1. A process to determine and use an information item called channel configuration information whereby, in a data transmission system in which data from a plurality of channels are concentrated onto one common channel by means of a multiplexing operation performed at a master station according to said channel configuration and in which the data are demultiplexed at the other end of said common channel by a so-called slave station that routes the data to their respective destinations designated in accordance with said channel configuration, said information can be transferred to and processed by the slave station, said process comprising the steps of:
forming at the master station a sequence representative of the configuration of active channels, called active channel configuration sequence,
sending from the master station over said common channel said active channel configuration sequence preceded by a synchronization sequence,
receiving said synchronization sequence and said active channel configuration sequence by said slave station,
using the synchronization sequence to place the slave station in a data receive mode,
deriving from the active channel configuration sequence an indication of the configuration of channels selected to be activated, and
activating the selected channels at the slave station, said process being characterized in that said active channel configuration sequence is obtained by sending a predetermined character for each of said selected channels in a data transmit mode, and in that information provided by the synchronization sequence is used by the slave station, together with information provided by the active channel configuration sequence, to derive therefrom the channel configuration to be activated thereat.

2. A process according to claim 1, characterized in that said predetermined character is hexadecimal character 7E.

3. A process according to claim 1 or 2, characterized in that said active channel configuration sequence has a predetermined length such that it may contain a full predetermined character multiplexed from the slowest channel.

4. A process according to any of claims 1 to 3, characterized in that said active channel configuration sequence is formed by sending said predetermined character directly from the selected channels to be activated.

5. A process according to any one of claims 1 to 4, characterized in that said table is directly addressed by a predetermined portion of said active channel configuration sequence.

6. A device for forming and using a sequence representative of the channel configuration (A, B, C and/or D) whereby, in a data transmission system wherein date from a plurality of channels are concentrated onto one common channel (32) by means of a multiplexing operation performed at a master station (30) according to said channel configuration and wherein the data are demultiplexed at the other end of the common channel by a so-called slave station (34) that routes the data to their respective destinations (22, 24, 26 and/or 28) designated in accordance with said channel configuration the slave station is informed of the configuration of channels selected by the master station to be activated, said device being characterized in that it includes:
(1) at the master station:
means (REGA, REGB, REGC, REGD) for storing a predetermined character associated with each of the channels connected to said master station, and
transmission means (38) for transmitting by means of a multiplexing operation in a so-called data transmit mode, the predetermined characters associated with the channels selected to be activated;
(2) at the slave station:
means (34, 42) connected to said common channel for receiving the multiplexed characters and including:
storage means (CONF) for storing the received characters
a configuration table (CONF TABLE) which, when adressed by the content of said storage means, directly provides information representative of the configuration of active channels; and
means responsive to said information representative of the configuration of active channels or activating the selected channels.

7. A device according to claim 6, characterized in that said multiplexing of predetermined characters is performed under the control of a central system (10).

8. A device according to claim 6, characterized in that said characters are hexadecimal characters 7E directly supplied by date processing terminals (12 to 17) selected to be respectively attached to an active channel.

9. A device according to claim 6, characterized in that said transmission means includes a register (QUAD REG) for storing groups of bits (quadbits) formed by multiplexing data in registers (REGA, REGB, REGC and/or REGD) pertaining to said storage means associated with the active channels.

## Patentansprüche

1. Verfahren zur Bestimmung und Verwendung einer Information über die Konfiguration der aktiven Kanäle, die es ermöglicht, in einem Übertragungssystem, wo die auf mehreren Kanälen ankommenden Daten auf einem gemeinsamen Verbindungsweg durch einen bei einer Hauptstation der Konfiguration der Kanäle entsprechend ausgeführten Multiplexvorgang konzentriert sind, und dann die Daten am anderen Ende dieses Verbindungsweges über eine Slave-Station demultiplexiert sind, die die Daten zu den jeweils der Konfiguration der Kanäle entsprechend bezeichneten Empfängern verteilt, Daten auszutauschen und diese Information bei der Slave-Station auszuwerten, wobei das Verfahren durch die folgenden Vorgänge gekennzeichnet ist:
Aufbau einer als repräsentativ für die Konfiguration der aktiven Kanälen bezeichneten Sequenz bei der Hauptstation;
Übertragung dieser für die Konfiguration repräsentativen und einer sogenannten Synchronisiersequenz folgenden Sequenz durch die Hauptstation und auf dem gemeinsamen Verbindungsweg;
Empfang der sogenannten Synchronisier- und Konfiguration-Sequenzen in der Slave-Station;
Verwendung der Synchronisier-Sequenz, um die Slave-Station im Datenempfang-Zustand einzusetzen;
Verwendung der Konfiguration-Sequenz, um daraus eine Angabe über die Konfiguration der als aktiv ausgewählten Kanäle abzuleiten; und,
Aktivierung der ausgewählten Kanäle bei der Slave-Station;
wobei das Verfahren dadurch gekennzeichnet ist, dass die für die Konfiguration der Kanäle repräsentative Sequenz durch die Übertragung eines vorbestimmten Charakters aus jedem der als aktiv ausgewählten Kanäle erreicht ist, wobei die Übertragung in dem Datenübertragungsmodus erfolgt, und dass bei der Slave-Station die von der Synchronisier-Sequenz gelieferten Informationen zusammen mit den der für die Konfiguration repräsentativen Sequenz verwendet sind, um daraus die Konfiguration der zu aktivierenden Kanäle für die Slave-Station abzuleiten.

2. Verfahren für die Konfiguration der Kanäle nach Anspruch 1 dadurch gekennzeichnet, dass der vorbestimmte Charakter das Hexadezimalzeichen 7E ist.

3. Verfahren nach einem der Ansprüche 1 oder 2, dadurch gekennzeichnet, dass die Konfiguration-Sequenz eine vorbestimmte Länge aufweist, die so ausgebildet ist, dass sie einen vollständigen vorbestimmten Charakter, von dem langsameren Kanal als multiplexiert, enthalten kann.

4. Verfahren nach einem der Ansprüche 1 bis 3, dadurch gekennzeichnet, dass der Aufbau dieser Konfiguration-Sequenz durch die Übertragung des vorbestimmten Charakters unmittelbar ab den zur Aktivierung ausgewählten Kanälen ausgeführt ist.

5. Verfahren nach einem der Ansprüche 1 bis 4, dadurch gekennzeichnet, dass die Tabelle direkt von einem vorbestimmten Teil der Konfiguration-Sequenz adressiert ist.

6. Einrichtung zum Aufbau und zur Verwendung einer für die Konfiguration der Kanäle (A, B, C und/oder D) repräsentativen Sequenz, die es ermöglicht, in einem Übertragungssystem, wo die auf mehreren Kanälen ankommenden Daten auf einem gemeinsamen Verbindungsweg (32) durch einen bei einer Hauptstation (30) der Konfiguration der Kanäle entsprechend ausgeführten Multiplexvorgang konzentriert sind, und dann die Daten am anderen Ende dieses Verbindungsweges über eine Slave-Station (34) demultiplexiert sind, wo diese Slave-Station dazu bestimmt ist, die Daten zu den jeweils der Konfiguration der Kanäle entsprechend bezeichneten Empfängern (22, 24, 26 und/oder 28) zu verteilen, an die Slave-Station die Konfiguration der Kanäle zu geben, die von der Hauptstation zur Aktivierung ausgewählt sind, wobei die Einrichtung dadurch gekennzeichnet ist, dass sie einschliesst:

1) bei der Hauptstation:
Mittel (REGA, REGB, REGC, REGD) zur Einspeicherung eines vorbestimmten Charakters für jeden der mit der Hauptstation verbundenen Kanäle;
Mittel (38) zur Übertragung der vorbestimmten Charaktere für die zur Aktivierung ausgewählten Kanäle durch Multiplexen in einem sogenannten Datenübertragungsmodus;

2) bei der Slave-Station:
Mittel (34, 42) zum Empfangen der multiplexierten Charaktere, wo diese Mittel mit dem gemeinsamen Verbindungsweg verbunden sind und folgendes einschliessen:
Mittel (CONF) zur Speicherung der empfangenen Charaktere; und
eine Konfiguration-Tabelle (CONF TABLE), die bei Inhaltsadressierung der Speichermittel direkt die für die Konfiguration der aktiven Kanäle repräsentative Information direkt liefert; und von der Information über die Konfiguration der aktiven Kanäle gesteuerte Mittel, die die zu aktivierenden Kanäle im Aktivzustand einsetzen.

7. Einrichtung nach Anspruch 6, dadurch gekennzeichnet, dass das Multiplexen der vorbestimmten Charaktere von einem Zentralsystem (10) gesteuert ist.

8. Einrichtung nach Anspruch 6, dadurch gekennzeichnet, dass diese Charaktere von Datenstationen direkt gelieferte Hexadezimalzeichen 7E sind, wo diese Datenstationen (12 bis 17) ausgewählt sind, um jeweils mit einem aktiven Kanal verbunden zu sein.

9. Einrichtung nach Anspruch 6, dadurch gekennzeichnet, dass die Übertragungsmittel ein Register (QUAD REG) aufweisen, das dazu bestimmt ist, Gruppen von Bits (quadbits) einzuspeichern, die durch das Multiplexen der Daten derjenigen Register (REGA, REGB, REGC und/oder REGD) aufgebaut sind, die zu den aktiven Kanälen zugeordneten Speichermitteln gehören.

FIG. 1

0 064 120

FIG.2A

# FIG. 2B

TT

DSRS

38

RTS

RFS

F. E.

32

TD

CARTE

TTM

INTERFACE

MODEM

# FIG. 3 .

34

CD

RD

90

CONF

32

CKR

CKR

AD. REG.

CONF.
TABLE

OUT. REG.

90    CDA'

91    CDB'

92    CDC'

93    CDD'

42

40